# EUROPEAN PATENT SPECIFICATION

(11) **EP 3 005 215 B1**
(45) Date of publication and mention of the grant of the patent: **31.08.2022**
(21) Application number: 13898643.5
(22) Date of filing: 29.05.2013
(51) Int. Cl.: H04L 9/40, G06F 21/31, G06F 21/32, G06F 21/44

(54) **PASSIVE SECURITY OF APPLICATIONS**
PASSIVE SICHERHEIT VON ANWENDUNGEN
SÉCURITÉ PASSIVE POUR APPLICATIONS

(43) Date of publication of application: 13.04.2016
(73) Proprietor: Ent. Services Development Corporation LP, Houston, TX 77070 (US)
(72) Inventor: GIBSON, Jonathan, Austin, Texas 78728 (US); FOSTER, Stanley, Milford, Michigan 48380-3726 (US); MONSON, Ronald, Locust Grove, Georgia 30248 (US); MERKEL, Harold, Houston, Texas 77070 (US)
(74) Representative: Gill Jennings & Every LLP
(86) International application number: PCT/US2013/043027
(87) International publication number: WO 2015/084293

(56) References cited:
- JP-A- 2008 084 044
- KR-A- 20120 045 921
- KR-A- 20120 119 966
- KR-B1- 100 747 446
- US-A1- 2007 014 443
- US-A1- 2010 192 209
- US-A1- 2012 164 978
- US-A1- 2012 167 170
- US-A1- 2013 067 547
- US-A1- 2013 111 586

## Description

### BACKGROUND

Service providers and manufacturers are challenged to deliver quality and value to consumers, for example by providing device security. Devices are used for a variety of tasks, for example, consuming content, voice communications, gaming, navigation, etc. Users of devices may wish to secure these devices from others.

Reference is made to US 2010/192209A1, which discloses technology for enabling passive enforcement of security at computing systems. A component of a computing system can passively authenticate or authorize a user based on observations of the user's interactions with the computing system. The technology may increase or decrease an authentication or authorization level based on the observations. The level can indicate what level of access the user should be granted. When the user or a component of the computing device initiates a request, an application or service can determine whether the level is sufficient to satisfy the request. If the level is insufficient, the application or service can prompt the user for credentials so that the user is actively authenticated. The technology may enable computing systems to "trust" authentication so that two proximate devices can share authentication levels.

### BRIEF DESCRIPTION OF THE DRAWINGS

The following detailed description references the drawings, wherein:
FIG. 1 is a block diagram of a system including a computing device for performing a security function on applications, according to one example;
FIG. 2 is a block diagram of device capable of performing a security function on applications, according to one example;
FIG. 3 is a flowchart of a method for performing a security function for applications, according to one example; and
FIG. 4 is a flowchart of a method for processing passive user information for performing a security function, according to one example.

### DETAILED DESCRIPTION

Devices can be used to make and/or provide content to users. Some users or entities may wish to secure information on the devices. For example, a business may wish to protect information from being seen by other individuals outside of a user, or the user may wish for certain content to be protected by others. The security desired may be more specific than a model where users sign in with a set of credentials and the credentials can be used until expired. The invention is defined by the appended independent claims.

Accordingly, various embodiments disclosed herein relate to ensuring that an end user using a secured resource is the same end user that initially authenticated to the secured resource by implicitly/passively authenticating the end user on defined intervals, random intervals, based on interrupts, etc. based on implicit/passive security information, such as facial recognition, print recognition (e.g., palm print, finger print, etc.), retina information, voice recognition, gait, heart signals, brain signals, typing rhythms, user keys, combinations thereof, etc. In some examples, when one or more users are tied to a device, the passive authentication can be used as a primary authentication for the device.

The passive authentication can ensure that the user accessing a secured resource is the same end user that initially authenticated the secured resource. Continuous authentication can be used to ensure security when the user leaves the area or a new user accesses content on the device, In some examples, it may not be secure to allow the new user access certain content on the device. As such, a security function can be performed based on the determination of a likelihood that the current user may be different than the user that provided security credentials. In some examples, different security functions for different applications may be performed based on the same information. The different security functions can include a negative security function such as limiting or removing access to an application or content, a neutral security function, such as requesting further authentication for the content/application, requesting a more thorough check from a passive security engine, etc., or a positive security function, such as keep allowing access to an application and/or content, etc.

In some examples, a passive security engine is a means to process information to determine the likelihood of security. The likelihood could be for an application, for particular content, etc. Further, the likelihood can be signified using a score, a value, a confidence level, a Boolean value, or the like. The passive security engine can be located on the device performing the security function or be located on another device (e.g., a server or other platform).

Moreover, one or more inputs connected to the device, integrated into the device, or the like can be used to generate the passive information to be processed. Drivers can be installed on the device to seamlessly connect to the respective input devices. Further a program on the device can control which input devices are used to gather security credentials and/or when to use the input devices. Moreover, the program can determine what combination of devices is available and/or which devices to use.

With the approaches described herein, the situation where one end user authenticates to a security sensitive resource via a device and then allows a second unauthenticated user to view/use the security sensitive resource via the device can be caught. Further, the approach can allow for the second user to access the device, where the content is not as sensitive.

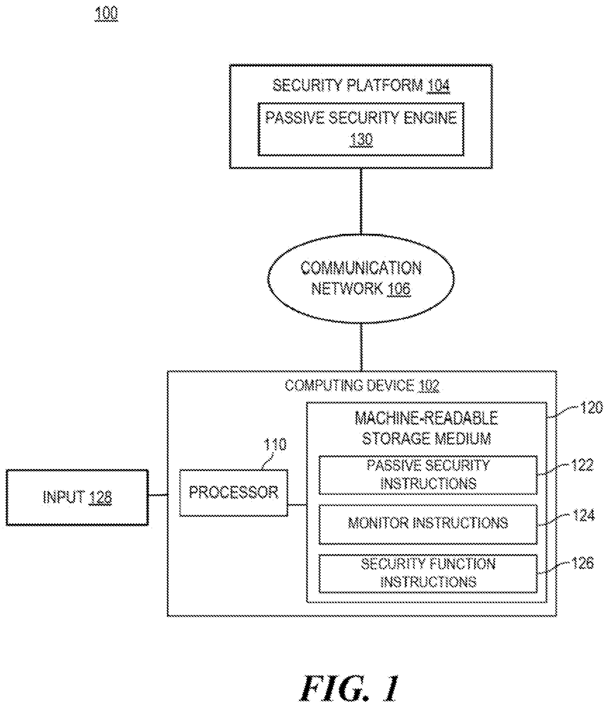

FIG. 1 is a block diagram of a system including a computing device for performing a security function on applications, according to one example. The system 100 can include a computing device 102 that communicates with other devices, such as a security platform 104, via a communication network 106. In certain examples, the computing device 102 and/or the other devices (e.g., security platform 104) are computing devices, such as servers, client computers, desktop computers, mobile computers, etc. The computing device 102 and/or security platform 104 can be implemented via a processing element, memory, and/or other components.

The computing device 102 includes, for example, a processor 110, and a machine-readable storage medium 120 including instructions 122, 124, 126 for performing passive security on the device. As noted, computing device 102 may be, for example, a notebook computer, a slate computing device, a portable reading device, a wireless email device, a mobile phone, a server, a workstation, a special purpose machine, or any other computing device,

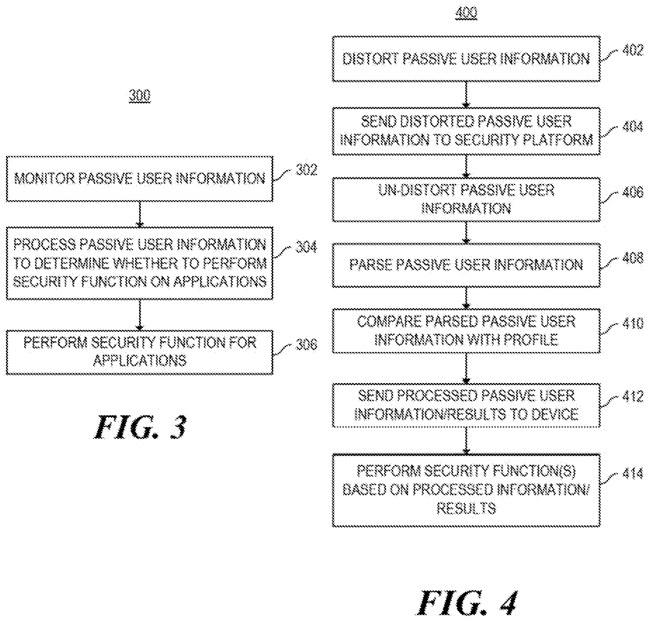

Processor 110 may be, at least one central processing unit (CPU), at least one semiconductor-based microprocessor, at least one graphics processing unit (GPU), other hardware devices suitable for retrieval and execution of instructions stored in machine-readable storage medium 120, or combinations thereof. For example, the processor 1 10 may include multiple cores on a chip, include multiple cores across multiple chips, multiple cores across multiple devices (e.g., if the computing device 102 includes multiple node devices), or combinations thereof. Processor 110 may fetch, decode, and execute instructions 122, 124, 126 to implement the approaches of FiGs. 3 and/or 4. As an alternative or in addition to retrieving and executing instructions, processor 110 may include at least one integrated circuit (IC), other control logic, other electronic circuits, or combinations thereof that include a number of electronic components for performing the functionality of instructions 122, 124, 126.

Machine-readable storage medium 120 may be any electronic, magnetic, optical, or other physical storage device that contains or stores executable instructions. Thus, machine-readable storage medium may be, for example, Random Access Memory (RAM), an Electrically Erasable Programmable Read-Only Memory (EEPROM), a storage drive, a Compact Disc Read Only Memory (CD-ROM), and the like. As such, the machine-readable storage medium can be non-transitory. As described in detail herein, machine-readable storage medium 120 may be encoded with a series of executable instructions for providing passive security for the computing device 102.

One or more applications can be executed by the computing device 102, In some examples, the applications are different from an operating system which may also be executing on the computing device 102. In one example, an application is executable instructions or software that causes a computing device to perform useful tasks beyond the running of the computing device itself. Examples of applications can include a game, a browser, enterprise software, accounting software, office suites, graphics software, media players, project engineering software, simulation software, development software, web applications, standalone restricted material applications, etc. The application software can be passively secured using a passive security. Moreover, a plugin or other code may be used to transform a general use application into a restricted material application used to view restricted content, In some examples, a web application is an application that is accessed by users over a network such as an intranet, the Internet, etc. Further, a web application can be coded in a browser-supported programming language. A standalone restricted material application can be an application, such as a browser or content providing application that can work without modification with the passive security engine.

In one example, applications of the computing device 102 can be configured to be associated with a passive security engine. In some examples, the engine can be located on the security platform 104, such as passive security engine 130 (e.g., via a client/server relationship). In other examples, one or more parts of the passive security engine 130 can be implemented on the computing device 102, for example, via passive security instructions 122. The applications can be configured via one or more instructions or code. The code can include plug-ins or other modules to add security features to the application (e.g., a web browser, an office suite, etc.). As such, passive security can be implemented at the application level, at the content level, and/or at the level of a portion of the application implementing the passive security.

In some examples, the passive security instructions 122 can be executed to cause monitoring of the computing device 102 and to process the monitored information. Monitoring instructions 124 can be executed by the processor 110 to use one or more devices to monitor passive information, for example, information about the user of the computing device 102. In some examples, the passive security instructions 122 are used to provide the passive information to the passive security engine 130. In other examples, the passive security engine can be implemented at the computing device 102 via the passive security instructions 122.

Code can be implemented to collect information from one or more inputs 128. The inputs 128 can be from devices communicatively connected to the computing device 102 (e.g., via a wireless connection, a wired connection, etc.). Moreover, the input devices may be integrated in the computing device 102.

During execution of the application(s), passive security engine 130 can associate the user with a profile. This can be done, for example, by logging (e.g., user name and password, biometric information, a key, etc.) into the computing device 102, the application(s), a passive security agent on the computing device 102, etc. The profile can be built via a tool that takes in baseline information (e.g., an employer may take fingerprints, a retina scan, etc. and upload to the database), via machine learning (e.g., processing typing patterns, voice patterns, etc.), or the like. As such, the passive security engine can be configured for a particular user. The profile can include information that can be used to check the collected passive information about the user. This can include unprocessed information, such as an encrypted or unencrypted picture of the user and/or processed information, such as nodal points of the face of the user processed from an image.

Further, during execution of the application(s), information passive user information collected via the executed monitor instructions 124 can be processed by the passive security engine. As noted, one or more devices can be monitored to collect passive user information, for example, as input 128. Examples of devices for monitoring can include one or more image sensors (e.g., a camera, infrared sensor, etc.), one or more scanners (e.g., a palm print scanner, a fingerprint scanner, etc.), a user input (e.g., mouse, keyboard, etc.), biometric sensors (e.g., heart sensors, brain sensors, embedded chips, etc.), voice sensors (e.g., a microphone), sensors to monitor movement, a key (e.g., a Bluetooth key, a USB key, etc.), or the like.

Usage of input devices can be controlled by the monitor instructions 124. In one example, one or more of the input devices may continuously take readings, which can be formatted, tagged, and stored. An example of such an input device may be a keyboard input, where the typing rhythm of the keyboard is analyzed to determine the likelihood that the user is the authenticated user. In other examples, input devices may be continuously on, but a snapshot of the device information may be taken based on a predetermined or periodic time or interrupt. For example, a picture of a person's face for face recognition may be taken at a predetermined time or when additional motion is sensed. The additional motion can be sensed using another input device or based on an analysis of the information at the input device. In further examples, an input device may turn on periodically or based on an interrupt to take a reading. Different types of readings can be formatted, tagged, and stored using different approaches.

Information monitored by the inputs can be caused to be processed at the passive security engine. As noted, one or more parts of the passive security engine may be implemented on the computing device 102, or the passive security instructions can cause the passive security engine 130 of a security platform 104 to process the information. In the example of an external passive security engine 130, the computing device can distort the passive user information to generate distorted passive user information, In some examples, an encrypting mechanism can be used to distort the passive user information. In the example of encrypting, the passive security engine 130 may have information to decode the distorted passive user information. The distorted passive user information or undistorted passive user information can be sent to the passive security engine. In some examples, the passive user information can be sent to a local passive security engine. Further, the local information may be stored distorted to improve user privacy/security. The information can be processed at the passive security engine and processed passive user information can be received.

The passive security engine can process the passive user information via one or more functions. In certain examples, the functions can be customized for an application, particular content, particular information available, or the like. The customization can be based on one or more rules associated with the respective applications/content. In some examples, the rules can be provided to the passive security engine (e.g., from the respective application).

The function can take into account the passive user information available, the profile, as well as the rules to determine a result. In certain examples, the result can be Boolean stating whether the engine believes that the proper user is still at the computing device, In other examples, the results can include more granularities. For example, the passive search engine can produce a score based on the information. The score may, for example, be based on one or more weighting factors or rules. These rules/weighting factors may be specific to an application/content or may be general. In one example, the rules/weighting factors can be associated with how likely the passive information can properly detect whether an individual near the computing device 102 is the authorized user.

In one example, the score can be out of 100. This is for example purposes and it is noted that the score may be variable based on usage. Each type of passive user information can be associated with a value out of the 100 score. For example, a retina scan can be worth 40 points, a fingerprint can be worth 20 points, facial recognition can be worth 20 points, and a digital key associated with the user can be worth 20 points. In certain examples, these point values can be determined by analyzing the passive user information as compared to the profile. Further, a confidence factor may be used to show how likely the passive user information is correct. For example, if in a fingerprint determination, 20 points of the finger are matched out of 25, full points may or may not be given to the score.

Further, weighting factors can be based on the context of the computing device 102. For example, if the computing device 102 has a camera attached for facial recognition, the resolution of the camera can affect the maximum amount of points available for the score.

In certain examples, the score can be provided to the applications as results. In other examples, the score can be processed at the passive security engine to provide the applications with other types of results, for example, provide access, do not provide access, or more information needed. As such, the respective applications and/or the passive security engine can do the analysis to determine the results or other processed results.

In one example, the application can be associated with a threshold score that allows the user to be provided access. As an example, the threshold can be 80/100 score points. If this threshold is met, the user is continued to be provided access. In another example, another threshold can be set to request more information or further analysis. For example, if the score is between 60 and 80, additional analysis can be performed and/or more information can be taken to perform the analysis. Additionally, other types of passive user information can be checked. For instance, the example above did not take into consideration a vocal input, additional analysis can take into account such information. Moreover, an active function may be requested of the user. For example, the user may be asked to look into a camera for a more focused retina or facial scan. In another example, the user may be asked to authenticate again.

Different applications on the computing device 102 can be associated with different thresholds. As such, one application on the computing device 102 may have a threshold that passes and is allowed access, while another application may have a threshold that fails and the user is logged out or otherwise deprived of access, while yet another application/associated content can attempt a more thorough check on the user (e.g., ask the user to provide a finger print scan). Moreover, the thresholds of the respective applications can be dynamic based on content being provided (e.g., some content may be associated with additional security) and/or the context of the computing device 102 or user. For example, if the computing device is at a work location, a lower threshold may be used than if the user was home. In another example, if the computing device was at another unknown location (e.g., a coffee shop), the threshold may be higher. Location context can be based on various technologies, for example, analysis of an Internet Protocol (IP) address, analysis of location information (e.g., using cellular tracking, global positioning information, etc.). Other contextual information may be the time. For example, if the computing device is used during normal working hours for the user, the threshold may be lower than if the computing device was used at off hours. Moreover, the amount of times the user is passively checked can depend on the context. For example, a normal time period or more secure location can lead to less frequent checks.

A security function can be performed by one or more of the applications based on the results of the passive security engine, for example, by executing security function instructions 126. In some examples, the security function instructions can be included as part of a plugin of an application and/or as part of the application itself. As noted above, security functions can include disallowing access to the application, continuing to allow access to the application, asking for the user to provide credentials, providing additional passive information to the passive security engine for additional checking, or the like.

As such, processed passive user information processed by the passive security engine can include results as to whether one of the applications should be allowed continuing access. Moreover, the results or other results can be used to determine whether another application should be allowed continuing access. The results for the two applications can be different based on the same processed passive user information. As noted, the results can be explicit meanings or can be a score that the particular application can process internally to determine respective security functions. In some examples, a source of the content/application can determine the security functions to use and/or the authentication requirements. These can be implemented via a plugin or other code.

In some examples, a part of one application can be disabled, while another part is allowed (e.g., a web browser with two separate sites open, an office application with two documents open, etc.). This can be based on analysis done at the passive security engine and/or at the application. Moreover, content associated with the part can be targeted.

The communication network 106 can use wired communications, wireless communications, or combinations thereof. Further, the communication network 106 can include multiple sub communication networks such as data networks, wireless networks, telephony networks, etc. Such networks can include, for example, a public data network such as the Internet, local area networks (LANs), wide area networks (WANs), metropolitan area networks (MANs), cable networks, fiber optic networks, combinations thereof, or the like. In certain examples, wireless networks may include cellular networks, satellite communications, wireless LANs, etc. Further, the communication network 106 can be in the form of a direct network link between devices. Various communications structures and infrastructure can be utilized to implement the communication network(s).

By way of example, the computing device 102 and security platform 104, and/or other devices communicate with each other and other components with access to the communication network 106 via a communication protocol or multiple protocols. A protocol can be a set of rules that defines how nodes of the communication network 106 interact with other nodes. Further, communications between network nodes can be implemented by exchanging discrete packets of data or sending messages. Packets can include header information associated with a protocol (e.g., information on the location of the network node(s) to contact) as well as payload information. information exchanged between the computing device 102 and the security platform 104 can be encrypted, for example, using RSA 128 bit encryption or another type of encryption.

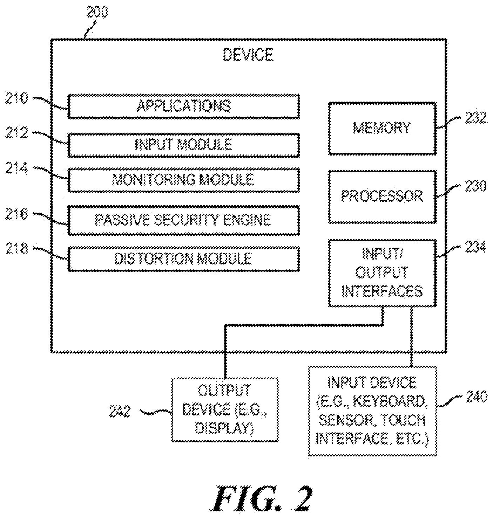

FIG. 2 is a block diagram of device capable of performing a security function on applications, according to one example. In this example, the device 200 includes one or more applications 210, an input module 212, a monitoring module 214, an implicit passive security engine 216, a distortion module 218, a processor 230, memory 232, and input/output interfaces 234. Other components can also be included or otherwise connected to the device 200, for example, input devices 240 and/or output devices 242.

As with computing device 102 of FIG. 1, device 200 may be a notebook computer, a slate computing device, a portable reading device, a wireless email device, a mobile phone, a workstation, a piece of machinery, or any other computing device capable of performing a security function based on passive user information. Processor 230 may be a CPU, GPU, or microprocessor suitable for retrieval and execution of instructions and/or electronic circuits configured to perform the functionality of any of the modules 210, 212, 214, 216, 218 described herein.

One or more applications 210 can be present on the device 200. One or more of the applications 210 can execute simultaneously. Further, the applications can be associated with a passive security engine 216. The passive security engine 216 can implicitly rate the likelihood of whether a user of the device 200 is a user that has authenticated into an account, an application, etc. This information can be used to determine whether to provide the user access to an application and/or content. Moreover, the applications may include a web application, a standalone restricted material application, combinations thereof, etc.

An input module 212 can control input/output interfaces 234 to receive input from one or more input devices 240. In some examples, the input devices can include sensors. A sensor is a converter that measures a physical quantity and converts it into information that can be read by the device. Examples of sensors include image sensors such as cameras, print scanners (e.g., fingerprint/palm print scanners, etc.), retina scanners, etc., audio scanners such as a microphone, navigational sensors (e.g., global positioning system, etc.), movement sensors, proximity sensors, touch sensors (e.g., keyboards, touch screen sensors, etc.), etc. The sensors and/or other input devices 240 can be integrated into the device 200 or be attached via another mechanism (e.g., wireless signal, a cable, etc.).

The monitoring module 214 can monitor passive user information via the inputs. The passive user information can be formatted into a format that the passive security engine 216 understands and be sent to the passive security engine 216. In some examples, the format may be distorted using a distortion module 218. In some examples, the passive security engine 216 can be implemented completely on the device 200. In other examples, a component of the passive security engine 216 can be local and be used to send passive user information to another platform for processing as further described in FIG. 1.

The passive security engine can determine whether to perform a security function on the applications. In one example, the passive security engine can be used to determine at least two separate security functions for different applications based on the passive user information. In some examples, the decisions can be made via a plugin or specific code running on the respective applications.

In one example, the security function used on an application is based on a function of the passive user information and rules associated with the respective application. For example, the passive user information and rules can be used to generate a score for the likelihood that the user is a particular person (e.g., as part of a function called). The score can then be used by the respective application to determine a proper security function to perform (e.g., allow the user continuing access, restrict access to content or an application, request more information or security checks (implicit or explicit), or the like).

Moreover, a security level of the respective applications can be used to determine the security function. For example, a first application or content of the application may be associated with a first security level. That security level may require a particular score (e.g., a threshold) to continue access. Moreover, the security level can be used to determine what passive user information is collected and/or used at the passive security engine 216. Further, in certain scenarios, the security level may be used to change how much weight a particular type of information has in the score. As further detailed above, a score and/or other results can be the output of the passive security engine 216 to the application(s) 210.

As detailed herein, device 200 may include a series of modules 210, 212, 214, 216, 218 for performing the methods of FiGs. 3 and 4. Each of the modules 210, 212, 214, 216, 218 may include, for example, hardware devices including electronic circuitry for implementing the functionality described herein. In addition or as an alternative, each module may be implemented as a series of instructions encoded on a machine-readable storage medium of device 200 and executable by processor 230. It should be noted that, in some embodiments, some modules are implemented as hardware devices, while other modules are implemented as executable instructions.

FIG. 3 is a flowchart of a method for performing a security function for applications, according to one example. Although execution of method 300 is described below with reference to device 200, other suitable components for execution of method 300 can be utilized (e.g., computing device 102). Additionally, the components for executing the method 300 may be spread among multiple devices. Method 300 may be implemented in the form of executable instructions stored on a machine-readable storage medium, such as storage medium 120, and/or in the form of electronic circuitry.

Applications can be configured to execute on the device 200. The user of the device may log into one or more accounts associated with respective applications. The accounts and/or applications may be associated with a passive security engine 216. Examples of applications can include a web application, a standalone restricted material application, a document viewer or modifier, or the like.

At 302, a monitoring module 214 is used to monitor passive user information via multiple inputs to the device 200. As noted above, the monitoring can include processing passive user information. The passive user information can be monitored from inputs, such as sensors, other electronics devices, etc.

At 304, the device 200 can cause processing of the passive user information at the passive security engine. The processing can be done at the device 200 or can be sent to another platform for processing at the platform and receiving results of that processing as further detailed in FIG. 4. The processed information or results can be used to determine whether to perform a respective security function for one or more of the applications executing on the device 200. The processed information can also be based on a determination of whether the device is secure. In some examples, the device can be considered secure if a user of the device 200 matches a profile associated with the passive security engine.

As noted above, the processing can result in a score that can be used by the respective applications and/or other information (e.g., a Boolean value or action to take) that can be used by the respective applications to perform respective security functions (306). Security functions can be performed at two or more of the applications.

In one example, a user can navigate to a corporate application that includes sensitive financial data. This could trigger a passive face recognition authentication of the user on a frequency of every 2 minutes, while accessing corporate email may only require an initial authentication and intermittent validation of presence by typing pattern or proximity sensor. Access to external or non-critical sites could be allowed with no additional authentication.

In some examples, the passive security engine can be used to perform the initial authentication as well. For example, the device may be associated with one or more profiles associated with the passive security engine. The passive security engine can take information about a user and compare to the set of profiles to determine whether the user should be allowed access. This can be useful, for example, in a lab setting or family setting, where multiple people can have legitimate access rights to the device.

Further, in some examples, the electronic representation of the security credentials used by this platform are cancellable (can be reset), this is accomplished by distorting the electronic representation of the security credentials (e.g. fingerprints). Distortion of the electronic representation of the security credentials helps security by accounting for the possibility that the information can be stolen. If it is determined that the information has been stolen, the security credentials can be reset. In some examples, resetting may include using a new encrypted sample for comparison purposes.

FIG. 4 is a flowchart of a method for processing passive user information for performing a security function, according to one example. Although execution of method 300 is described below with reference to computing device 102, other suitable components for execution of method 300 can be utilized (e.g., device 200). Additionally, the components for executing the method 300 may be spread among multiple devices. Method 300 may be implemented in the form of executable instructions stored on a machine-readable storage medium, such as storage medium 120, and/or in the form of electronic circuitry,

The computing device 102 can monitor inputs to determine passive user information. The passive user information can be distorted at 402. As noted above, this can be done by encrypting the passive user information (e.g., using public-key cryptography). The computing device 102 can then send the distorted passive user information to a security platform 104 (404),

A passive security engine 130 of the security platform 104 can process the distorted passive user information. The processing can include un-distorting the information (406) and determining a score associated with how likely the user of the computing device 102 is a particular user and/or is a secure (e.g., the user may not be considered secure if it is detected that someone is next to the user). As noted above, the passive security engine 130 can capture a sample and associate the sample with a profile. Then, the passive security engine 130 can extract unique data from the sample, e.g., to create a template. During processing of the passive user information, the passive security engine 130 can parse the passive user information (408) into differing types (e.g., fingerprint, typing analysis, retina, electronic key, etc.). Further, each of the parsed information can be compared to a respective template and the passive security engine 130 can determine whether the features extracted from the new sample match or not (410). One or more algorithms can be used for each type of input processing used. The matching process can also determine a confidence of how likely the matching is correct. This can be used, for example, to score the each of the different types of passive checks. In some examples, the scoring can be based on the quality of the equipment, the amount of matching that occurred. For example, a facial recognition scan may have 80 nodal points, of which 65 nodal points matched. This example may end in a positive match, but a better positive match may occur if 75 of the 80 points matched. On the other hand, a match of 30 out of 80 nodal points may end up as a failure and lead to zero points. As such, the amount of matching can affect the score and the amount of the affect need not be linear.

Then, at 412, the security platform 104 can send the processed passive user information and/or results back to the computing device 102. The processed passive user information can be distorted or un-distorted.

Then, the computing device 102 can receive the processed passive user information. As noted above, the processed passive user information can be in the form of a score or a likelihood that the computing device 102 is secure. In some examples, the likelihood can be separated into one or more levels that can represent associated security functions. For example, one level can be associated with continuing to allow an application to execute and provide content, a second level can be associated with stopping access to content at an application, and a third level can be associated with gathering additional passive information or an explicit authorization. At 414, respective applications can perform a security function based on the processed information/results. In some examples, a single application (e.g., a web browser) may use the processed information/results to perform multiple security functions. For example, an email application may be allowed continuing access, while a secured financial statement website may be logged out.

With the above approaches implicit passive security can be performed on a device based on implicit passive checks, such as, but not limited to, facial recognition, retina scans, voice input, typing patterns, etc. that can be done at set intervals, randomly, or based on an interrupt and can dynamically control content and/or applications that an end user can access/view in real-time. The implicit passive security checks can be configurable for certain content and/or applications so that more and/or less passive security checks can be performed dynamically in real-time. The passive security checks can also be based on context awareness of the device. For example, if the device is at a work location, less implicit checks may be performed or a lower threshold may be used to evaluate the checks.

## Claims

1. A non-transitory machine-readable storage medium storing instructions that, when executed by at least one processor of a device (200), cause the device (200) to:
configure a plurality of applications (210) of the device (200) to be associated with a passive security engine (216), the plurality of applications (210) including at least a first application and a second application;
authenticate a user of the device (200) based on login credentials, wherein upon authentication, the authenticated user is permitted to use the first application and the second application;
access a profile associated with the authenticated user, wherein the profile provides information associated with the authenticated user;
periodically monitor (302) passive user information after the authentication of the user, via a first set of a plurality of inputs (240) to the device (200) based on a pre-defined time interval, wherein the monitored passive user information includes at least a retina scan of a subsequent user of the device (200), a fingerprint scan of the subsequent user, and information describing a typing pattern associated with the subsequent user;
cause processing of the passive user information at the passive security engine (216), wherein the processing causes the passive security engine (216) to:
determine a score associated with the subsequent user of the device (200), the score comprises a set of sub-scores that include a first sub-score corresponding to the retina scan of the subsequent user, a second sub-score corresponding to the fingerprint scan of the subsequent user, and a third sub-score corresponding to the typing pattern associated with the subsequent user;
determine that the subsequent user is different from the authenticated user based on a comparison of the score associated with the subsequent user and information stored in the profile associated with the authenticated user; and
in response to the determination that the subsequent user is different from the authenticated user, determine at least one respective security function to be performed for at least the first application associated with the passive security engine (216) based on the determined score; and
perform (306) the at least one respective security function for at least the first application associated with the passive security engine (216) based on the determined score,
wherein upon determining that the score corresponds to a first range, the performed security function permits the subsequent user to continue using both the first application and the second application,
wherein upon determining that the score corresponds to a second range, the performed security function restricts user access to both the first application and the second application, and
wherein upon determining that the score corresponds to a third range, the performed security function monitors the passive user information via a different second set of the plurality of inputs (240) to the device (200) to conduct further security checks.

2. The non-transitory machine-readable storage medium of claim 1, wherein the processed passive user information includes first results as to whether a first one of the plurality of applications (210) should be allowed access.

3. The non-transitory machine-readable storage medium of claim 2, wherein the processed passive user information further includes second results as to whether a second one of the plurality of applications (210) should be allowed access.

4. The non-transitory machine-readable storage medium of claim 3, wherein the first one of the applications should be allowed access and the second one of the plurality of applications (210) should not be allowed access, and wherein the respective security functions are based on the first and second results.

5. The non-transitory machine-readable storage medium of claim 4, wherein the respective results are based on a respective function of the passive user information and rules associated with the respective applications.

6. The non-transitory machine-readable storage medium of claim 5, wherein the respective results include the score.

7. The non-transitory machine-readable storage medium of claim 6, wherein the respective functions are associated with weighting factors to determine the respective scores, and wherein the weighting factors are based, at least in part, on context information.

8. The non-transitory machine-readable storage medium of claim 1, wherein the passive user information further includes at least one of:
user face recognition, user voice recognition, and an electronic key, and wherein the plurality of applications (210) include at least one of: a web application and a standalone restricted material application.

9. A method, performed by a processor, (300) comprising:
authenticating a user of a device (200) based on login credentials, wherein upon authentication, the authenticated user is permitted to use a first application and a secondapplication;
accessing a profile associated with the authenticated user, wherein the profile provides information associated with the authenticated user;
periodically monitoring (302) passive user information, after the authentication of the user, via a first set of a plurality of inputs (240) to the device (200) based on a pre-defined time interval, wherein the monitored passive user information includes at least a retina scan of a subsequent user of the device (200), a fingerprint scan of the subsequent user, and information describing a typing pattern associated with the subsequent user;
cause processing of the passive user information at a passive security engine (216), wherein the processing causes the passive security engine (216) to:
determine a score associated with the subsequent user of the device (200), the score comprises a set of sub-scores that include a first sub-score corresponding to the retina scan of the subsequent user, a second sub-score corresponding to the fingerprint scan of the subsequent user, and a third sub-score corresponding to the typing pattern associated with the subsequent user;
determine that the subsequent user is different from the authenticated user based on a comparison of the score associated with the subsequent user and information stored in the profile associated with the authenticated user; and
in response to the determination that the subsequent user is different from the authenticated user, determine at least one respective security function to be performed for at least the first application associated with the passive security engine (216) based on the determined score; and
perform the at least one respective security function for at least the first application associated with the passive security engine (216) based on the determined score,
wherein upon determining that the score corresponds to a first range, the performed security function permits the subsequent user to continue using both the first application and the second application,
wherein upon determining that the score corresponds to a second range, the performed security function restricts user access to both the first application and the second application, and
wherein upon determining that the score corresponds to a third range, the performed security function monitors the passive user information via a different second set of the plurality of inputs (240) to the device to conduct further security checks.

10. The method of claim 9, wherein the plurality of applications (210) include at least one of: a web application and a standalone restricted material application, and wherein processed passive user information is based on a function of the passive user information and rules associated with the respective applications.

11. A computing device comprising:
at least one processor and a non-transitory machine-readable storage medium storing instructions that, when executed by the at least one processor, cause the computing device to:
associate a plurality of applications (210) including at least a first application and a second application with a passive security engine (216);
authenticate a user of a device based on login credentials, wherein upon authentication, the authenticated user is permitted to use the first application and the second application;
access a profile associated with the authenticated user, wherein the profile provides information associated with the authenticated user;
periodically monitor passive user information after the authentication of the user, via a first set of a plurality of inputs (240) to the device based on a pre-defined time interval, wherein the monitored passive user information includes at least a retina scan of a subsequent user of the device, a fingerprint scan of the subsequent user, and information describing a typing pattern associated with the subsequent user;
cause processing of the passive user information at the passive security engine (216), wherein the processing causes the passive security engine (216) to:
determine a score associated with the subsequent user of the device, the scorecomprises a set of sub-scores that include a first sub-score corresponding to the retina scan of the subsequent user, a second sub-score corresponding to the fingerprint scan of the subsequent user, and a third sub-score corresponding to the typing pattern associated with the subsequent user;
determine that the subsequent user is different from the authenticated user based on a comparison of the score associated with the subsequent user and information stored in the profile associated with the authenticated user; and
in response to the determination that the subsequent user is different from theauthenticated user, determine at least one respective security function to be performed for at least the first application associated with the passive security engine (216) based on the determined score; and
perform the at least one respective security function for at least the first application associated with the passive security engine (216) based on the determined score,
wherein upon determining that the score corresponds to a first range, the performed security function permits the subsequent user to continue using both the first application and the second application,
wherein upon determining that the score corresponds to a second range, the performed security function restricts user access to both the first application and the second application, and
wherein upon determining that the score corresponds to a third range, the performed security function monitors the passive user information via a different second set of the plurality of inputs (240) to the device to conduct further security checks.

12. The computing device of claim 11, wherein the plurality of applications (210) include at least one of: a web application and a standalone restricted material application, and wherein the respective security functions are based on a function of the passive user information and rules associated with the respective applications.

13. The computing device of claim 12, wherein the function is based on a security level of the respective applications.

## Patentansprüche

1. Nicht-flüchtiges maschinenlesbares Speichermedium, das Anweisungen speichert, die, wenn sie von mindestens einem Prozessor einer Vorrichtung (200) ausgeführt werden, die Vorrichtung (200) zu Folgendem veranlassen:
Konfigurieren einer Vielzahl von Anwendungen (210) der Vorrichtung (200), um einer passiven Sicherheitsmaschine (216) zugeordnet zu werden, wobei die Vielzahl von Anwendungen (210) mindestens eine erste Anwendung und eine zweite Anwendung umfasst;
Authentifizieren eines Benutzers der Vorrichtung (200) basierend auf Anmeldedaten, wobei nach der Authentifizierung dem authentifizierten Benutzer erlaubt wird, die erste Anwendung und die zweite Anwendung zu verwenden;
Zugreifen auf ein Profil, das dem authentifizierten Benutzer zugeordnet ist, wobei das Profil Informationen bereitstellt, die dem authentifizierten Benutzer zugeordnet sind;
periodisches Überwachen (302) passiver Benutzerinformationen nach der Authentifizierung des Benutzers über einen ersten Satz einer Vielzahl von Eingängen (240) zu der Vorrichtung (200) basierend auf einem vordefinierten Zeitintervall, wobei die überwachten passiven Benutzerinformationen mindestens einen Retina-Scan eines nachfolgenden Benutzers der Vorrichtung (200), einen Fingerabdruck-Scan des nachfolgenden Benutzers und Informationen, die ein Tippmuster beschreiben, das dem nachfolgenden Benutzer zugeordnet ist, umfassen;
Veranlassen der Verarbeitung der passiven Benutzerinformationen in der passiven Sicherheitsmaschine (216), wobei die Verarbeitung die passive Sicherheitsmaschine (216) zu Folgendem veranlasst:
Bestimmen einer Punktzahl, die dem nachfolgenden Benutzer der Vorrichtung (200) zugeordnet ist, wobei die Punktzahl einen Satz von Teilpunktzahlen umfasst, die eine erste Teilpunktzahl, die dem Retina-Scan des nachfolgenden Benutzers entspricht, eine zweite Teilpunktzahl, die dem Fingerabdruck-Scan des nachfolgenden Benutzers entspricht, und eine dritte Teilpunktzahl, die dem Tippmuster entspricht, das dem nachfolgenden Benutzer zugeordnet ist, umfassen;
Bestimmen, dass der nachfolgende Benutzer sich von dem authentifizierten Benutzer unterscheidet, basierend auf einem Vergleich der Punktzahl, die dem nachfolgenden Benutzer zugeordnet ist, und auf Informationen, die in dem Profil gespeichert sind, das dem authentifizierten Benutzer zugeordnet ist; und
als Reaktion auf die Bestimmung, dass der nachfolgende Benutzer sich von dem authentifizierten Benutzer unterscheidet, Bestimmen mindestens einer jeweiligen Sicherheitsfunktion, die für mindestens die erste Anwendung, die der passiven Sicherheitsmaschine (216) zugeordnet ist, basierend auf der bestimmten Punktzahl ausgeführt werden soll; und
Ausführen (306) der mindestens einen jeweiligen Sicherheitsfunktion für mindestens die erste Anwendung, die der passiven Sicherheitsmaschine (216) zugeordnet ist, basierend auf der bestimmten Punktzahl,
wobei, wenn bestimmt wird, dass die Punktzahl einem ersten Bereich entspricht, die ausgeführte Sicherheitsfunktion dem nachfolgenden Benutzer erlaubt, sowohl die erste Anwendung als auch die zweite Anwendung weiter zu benutzen,
wobei, wenn bestimmt wird, dass die Punktzahl einem zweiten Bereich entspricht, die ausgeführte Sicherheitsfunktion den Benutzerzugriff sowohl auf die erste Anwendung als auch auf die zweite Anwendung einschränkt, und
wobei, wenn bestimmt wird, dass die Punktzahl einem dritten Bereich entspricht, die ausgeführte Sicherheitsfunktion die passiven Benutzerinformationen über einen anderen zweiten Satz der Vielzahl von Eingängen (240) zu der Vorrichtung (200) überwacht, um weitere Sicherheitsüberprüfungen auszuführen.

2. Nicht-flüchtiges maschinenlesbares Speichermedium nach Anspruch 1, wobei die verarbeiteten passiven Benutzerinformationen erste Ergebnisse darüber enthalten, ob einer ersten der Vielzahl von Anwendungen (210) der Zugriff gestattet werden sollte.

3. Nicht-flüchtiges maschinenlesbares Speichermedium nach Anspruch 2, wobei die verarbeiteten passiven Benutzerinformationen ferner zweite Ergebnisse darüber enthalten, ob einer zweiten der Vielzahl von Anwendungen (210) der Zugriff gestattet werden sollte.

4. Nicht-flüchtiges maschinenlesbares Speichermedium nach Anspruch 3, wobei der ersten der Anwendungen der Zugriff gestattet werden sollte und der zweiten der Vielzahl von Anwendungen (210) der Zugriff nicht gestattet werden sollte, und wobei die jeweiligen Sicherheitsfunktionen auf den ersten und zweiten Ergebnissen basieren.

5. Nicht-flüchtiges maschinenlesbares Speichermedium nach Anspruch 4, wobei die jeweiligen Ergebnisse auf einer jeweiligen Funktion der passiven Benutzerinformationen und Regeln, die den jeweiligen Anwendungen zugeordnet sind, basieren.

6. Nicht-flüchtiges maschinenlesbares Speichermedium nach Anspruch 5, wobei die jeweiligen Ergebnisse die Punktzahl umfassen.

7. Nicht-flüchtiges maschinenlesbares Speichermedium nach Anspruch 6, wobei die jeweiligen Funktionen Gewichtungsfaktoren zugeordnet sind, um die jeweiligen Punktzahlen zu bestimmen, und wobei die Gewichtungsfaktoren zumindest teilweise auf Kontextinformationen basieren.

8. Nicht-flüchtiges maschinenlesbares Speichermedium nach Anspruch 1, wobei die passiven Benutzerinformationen ferner mindestens eines der Folgenden umfassen:
Benutzergesichtserkennung, Benutzerstimmerkennung und einen elektronischen Schlüssel, und wobei die Vielzahl von Anwendungen (210) mindestens eines der Folgenden umfasst: eine Webanwendung und eine eigenständige Anwendung mit beschränktem Material.

9. Verfahren, das von einem Prozessor (300) ausgeführt wird und Folgendes umfasst:
Authentifizieren eines Benutzers einer Vorrichtung (200) basierend auf Anmeldedaten, wobei nach der Authentifizierung dem authentifizierten Benutzer erlaubt wird, eine erste Anwendung und eine zweite Anwendung zu verwenden;
Zugreifen auf ein Profil, das dem authentifizierten Benutzer zugeordnet ist, wobei das Profil Informationen bereitstellt, die dem authentifizierten Benutzer zugeordnet sind;
periodisches Überwachen (302) passiver Benutzerinformationen nach der Authentifizierung des Benutzers über einen ersten Satz einer Vielzahl von Eingängen (240) zu der Vorrichtung (200) basierend auf einem vordefinierten Zeitintervall, wobei die überwachten passiven Benutzerinformationen mindestens einen Retina-Scan eines nachfolgenden Benutzers der Vorrichtung (200), einen Fingerabdruck-Scan des nachfolgenden Benutzers und Informationen, die ein Tippmuster beschreiben, das dem nachfolgenden Benutzer zugeordnet ist, umfassen;
Veranlassen der Verarbeitung der passiven Benutzerinformationen in einer passiven Sicherheitsmaschine (216), wobei die Verarbeitung die passive Sicherheitsmaschine (216) zu Folgendem veranlasst:
Bestimmen einer Punktzahl, die dem nachfolgenden Benutzer der Vorrichtung (200) zugeordnet ist, wobei die Punktzahl einen Satz von Teilpunktzahlen umfasst, die eine erste Teilpunktzahl, die dem Retina-Scan des nachfolgenden Benutzers entspricht, eine zweite Teilpunktzahl, die dem Fingerabdruck-Scan des nachfolgenden Benutzers entspricht, und eine dritte Teilpunktzahl, die dem Tippmuster entspricht, das dem nachfolgenden Benutzer zugeordnet ist, umfassen;
Bestimmen, dass der nachfolgende Benutzer sich von dem authentifizierten Benutzer unterscheidet, basierend auf einem Vergleich der Punktzahl, die dem nachfolgenden Benutzer zugeordnet ist, und auf Informationen, die in dem Profil gespeichert sind, das dem authentifizierten Benutzer zugeordnet ist; und
als Reaktion auf die Bestimmung, dass der nachfolgende Benutzer sich von dem authentifizierten Benutzer unterscheidet, Bestimmen mindestens einer jeweiligen Sicherheitsfunktion, die für mindestens die erste Anwendung, die der passiven Sicherheitsmaschine (216) zugeordnet ist, basierend auf der bestimmten Punktzahl ausgeführt werden soll; und
Ausführen der mindestens einen jeweiligen Sicherheitsfunktion für mindestens die erste Anwendung, die der passiven Sicherheitsmaschine (216) zugeordnet ist, basierend auf der bestimmten Punktzahl,
wobei, wenn bestimmt wird, dass die Punktzahl einem ersten Bereich entspricht, die ausgeführte Sicherheitsfunktion dem nachfolgenden Benutzer erlaubt, sowohl die erste Anwendung als auch die zweite Anwendung weiter zu benutzen,
wobei, wenn bestimmt wird, dass die Punktzahl einem zweiten Bereich entspricht, die ausgeführte Sicherheitsfunktion den Benutzerzugriff sowohl auf die erste Anwendung als auch auf die zweite Anwendung einschränkt, und
wobei, wenn bestimmt wird, dass die Punktzahl einem dritten Bereich entspricht, die ausgeführte Sicherheitsfunktion die passiven Benutzerinformationen über einen anderen zweiten Satz der Vielzahl von Eingängen (240) zu der Vorrichtung überwacht, um weitere Sicherheitsüberprüfungen auszuführen.

10. Verfahren nach Anspruch 9, wobei die Vielzahl von Anwendungen (210) mindestens eines der Folgenden umfasst: eine Webanwendung und eine eigenständige Anwendung mit eingeschränktem Material, und wobei die verarbeiteten passiven Benutzerinformationen auf einer Funktion der passiven Benutzerinformationen und Regeln basieren, die den jeweiligen Anwendungen zugeordnet sind.

11. Computervorrichtung, die Folgendes umfasst:
mindestens einen Prozessor und ein nicht-flüchtiges, maschinenlesbares Speichermedium, das Anweisungen speichert, die, wenn sie von dem mindestens einen Prozessor ausgeführt werden, die Computervorrichtung zu Folgendem veranlassen:
Zuordnen einer Vielzahl von Anwendungen (210), die mindestens eine erste Anwendung und eine zweite Anwendung umfassen, zu einer passiven Sicherheitsmaschine (216);
Authentifizieren eines Benutzers einer Vorrichtung basierend auf Anmeldedaten, wobei nach der Authentifizierung dem authentifizierten Benutzer erlaubt wird, die erste Anwendung und die zweite Anwendung zu verwenden;
Zugreifen auf ein Profil, das dem authentifizierten Benutzer zugeordnet ist, wobei das Profil Informationen bereitstellt, die dem authentifizierten Benutzer zugeordnet sind;
periodisches Überwachen passiver Benutzerinformationen nach der Authentifizierung des Benutzers über einen ersten Satz einer Vielzahl von Eingängen (240) zu der Vorrichtung basierend auf einem vordefinierten Zeitintervall, wobei die überwachten passiven Benutzerinformationen mindestens einen Retina-Scan eines nachfolgenden Benutzers der Vorrichtung, einen Fingerabdruck-Scan des nachfolgenden Benutzers und Informationen, die ein Tippmuster beschreiben, das dem nachfolgenden Benutzer zugeordnet ist, umfassen;
Veranlassen der Verarbeitung der passiven Benutzerinformationen in der passiven Sicherheitsmaschine (216), wobei die Verarbeitung die passive Sicherheitsmaschine (216) zu Folgendem veranlasst:
Bestimmen einer Punktzahl, die dem nachfolgenden Benutzer der Vorrichtung zugeordnet ist, wobei die Punktzahl einen Satz von Teilpunktzahlen umfasst, die eine erste Teilpunktzahl, die dem Retina-Scan des nachfolgenden Benutzers entspricht, eine zweite Teilpunktzahl, die dem Fingerabdruck-Scan des nachfolgenden Benutzers entspricht, und eine dritte Teilpunktzahl, die dem Tippmuster entspricht, das dem nachfolgenden Benutzer zugeordnet ist, umfassen;
Bestimmen, dass der nachfolgende Benutzer sich von dem authentifizierten Benutzer unterscheidet, basierend auf einem Vergleich der Punktzahl, die dem nachfolgenden Benutzer zugeordnet ist, und auf Informationen, die in dem Profil gespeichert sind, das dem authentifizierten Benutzer zugeordnet ist; und
als Reaktion auf die Bestimmung, dass der nachfolgende Benutzer sich von dem authentifizierten Benutzer unterscheidet, Bestimmen mindestens einer jeweiligen Sicherheitsfunktion, die für mindestens die erste Anwendung, die der passiven Sicherheitsmaschine (216) zugeordnet ist, basierend auf der bestimmten Punktzahl ausgeführt werden soll; und
Ausführen der mindestens einen jeweiligen Sicherheitsfunktion für mindestens die erste Anwendung, die der passiven Sicherheitsmaschine (216) zugeordnet ist, basierend auf der bestimmten Punktzahl,
wobei, wenn bestimmt wird, dass die Punktzahl einem ersten Bereich entspricht, die ausgeführte Sicherheitsfunktion dem nachfolgenden Benutzer erlaubt, sowohl die erste Anwendung als auch die zweite Anwendung weiter zu benutzen,
wobei, wenn bestimmt wird, dass die Punktzahl einem zweiten Bereich entspricht, die ausgeführte Sicherheitsfunktion den Benutzerzugriff sowohl auf die erste Anwendung als auch auf die zweite Anwendung einschränkt, und
wobei, wenn bestimmt wird, dass die Punktzahl einem dritten Bereich entspricht, die ausgeführte Sicherheitsfunktion die passiven Benutzerinformationen über einen anderen zweiten Satz der Vielzahl von Eingängen (240) zu der Vorrichtung (200) überwacht, um weitere Sicherheitsüberprüfungen auszuführen.

12. Computervorrichtung nach Anspruch 11, wobei die Vielzahl von Anwendungen (210) mindestens eines der Folgenden umfasst: eine Webanwendung und eine eigenständige Anwendung mit eingeschränktem Material, und wobei die jeweiligen Sicherheitsfunktionen auf einer Funktion der passiven Benutzerinformationen und Regeln, die den jeweiligen Anwendungen zugeordnet sind, basieren.

13. Computervorrichtung nach Anspruch 12, wobei die Funktion auf einer Sicherheitsstufe der jeweiligen Anwendungen basiert.

## Revendications

1. Support de stockage non transitoire lisible par machine stockant des instructions qui, quand elles sont exécutées par au moins un processeur d'un dispositif (200), amènent le dispositif (200) à :
configurer une pluralité d'applications (210) du dispositif (200) destinées à être associées à un moteur de sécurité passive (216), la pluralité d'applications (210) comprenant au moins une première application et une deuxième application ;
authentifier un utilisateur du dispositif (200) en se basant sur des identifiants de connexion, dans lequel, une fois l'authentification effectuée, l'utilisateur authentifié est autorisé à utiliser la première application et la deuxième application ;
accéder à un profil associé à l'utilisateur authentifié, dans lequel le profil fournit des informations associées à l'utilisateur authentifié ;
surveiller périodiquement (302) les informations d'utilisateur passives, après l'authentification de l'utilisateur, par le biais d'un premier ensemble d'une pluralité d'entrées (240) dans le dispositif (200) en se basant sur un intervalle de temps prédéfini, dans lequel les informations d'utilisateur passives surveillées comprennent au moins un balayage de la rétine d'un utilisateur ultérieur du dispositif (200), un balayage des empreintes digitales de l'utilisateur ultérieur, et des informations décrivant un style de frappe associé à l'utilisateur ultérieur ;
entraîner le traitement des informations d'utilisateur passives au niveau du moteur de sécurité passive (216), dans lequel le traitement amène le moteur de sécurité passive (216) à :
déterminer un score associé à l'utilisateur ultérieur du dispositif (200), le score comporte un ensemble de sous-scores qui comprennent un premier sous-score correspondant au balayage de la rétine de l'utilisateur ultérieur, un deuxième sous-score correspondant au balayage des empreintes digitales de l'utilisateur ultérieur, et un troisième sous-score correspondant au style de frappe associé à l'utilisateur ultérieur ;
déterminer que l'utilisateur ultérieur est différent de l'utilisateur authentifié en se basant sur une comparaison du score associé à l'utilisateur ultérieur et des informations stockées dans le profil associé à l'utilisateur authentifié ; et
en réponse à la détermination comme quoi l'utilisateur ultérieur est différent de l'utilisateur authentifié, déterminer au moins une fonction de sécurité respective devant être effectuée pour au moins la première application associée au moteur de sécurité passive (216) en se basant sur le score déterminé ; et
effectuer (306) ladite au moins une fonction de sécurité respective pour au moins la première application associée au moteur de sécurité passive (216) en se basant sur le score déterminé,
dans lequel, après avoir déterminé que le score correspond à une première plage, la fonction de sécurité effectuée permet à l'utilisateur ultérieur de continuer à utiliser à la fois la première application et la deuxième application,
dans lequel, après avoir déterminé que le score correspond à une deuxième plage, la fonction de sécurité effectuée limite l'accès de l'utilisateur à la fois à la première application et à la deuxième application, et
dans lequel, après avoir déterminé que le score correspond à une troisième plage, la fonction de sécurité effectuée surveille les informations d'utilisateur passives par le biais d'un deuxième ensemble différent de la pluralité d'entrées (240) dans le dispositif (200) pour réaliser d'autres contrôles de sécurité.

2. Support de stockage non transitoire lisible par machine selon la revendication 1, dans lequel les informations d'utilisateur passives traitées comprennent des premiers résultats permettant de savoir si l'accès à une première application de la pluralité d'applications (210) doit être autorisé.

3. Support de stockage non transitoire lisible par machine selon la revendication 2, dans lequel les informations d'utilisateur passives traitées comprennent par ailleurs des deuxièmes résultats permettant de savoir si l'accès à une deuxième application de la pluralité d'applications (210) doit être autorisé.

4. Support de stockage non transitoire lisible par machine selon la revendication 3, dans lequel l'accès à la première application des applications doit être autorisé et l'accès à la deuxième application de la pluralité d'applications (210) ne doit pas être autorisé, et dans lequel les fonctions de sécurité respectives sont basées sur les premiers et deuxièmes résultats.

5. Support de stockage non transitoire lisible par machine selon la revendication 4, dans lequel les résultats respectifs sont basés sur une fonction respective des informations d'utilisateur passives et des règles associées aux applications respectives.

6. Support de stockage non transitoire lisible par machine selon la revendication 5, dans lequel les résultats respectifs comprennent le score.

7. Support de stockage non transitoire lisible par machine selon la revendication 6, dans lequel les fonctions respectives sont associées à des facteurs de pondération pour déterminer les scores respectifs, et dans lequel les facteurs de pondération sont basés, au moins en partie, sur des informations de contexte.

8. Support de stockage non transitoire lisible par machine selon la revendication 1, dans lequel les informations d'utilisateur passives comprennent par ailleurs au moins l'une parmi : la reconnaissance faciale de l'utilisateur, la reconnaissance vocale de l'utilisateur, et une clé électronique, et dans lequel les applications de la pluralité d'applications (210) comprennent au moins l'une parmi : une application Web et une application autonome de document à diffusion restreinte.

9. Procédé, effectué par un processeur (300), comportant les étapes consistant à :
authentifier un utilisateur d'un dispositif (200) en se basant sur des identifiants de connexion, dans lequel, une fois l'authentification effectuée, l'utilisateur authentifié est autorisé à utiliser une première application et une deuxième application ;
accéder à un profil associé à l'utilisateur authentifié, dans lequel le profil fournit des informations associées à l'utilisateur authentifié ;
surveiller périodiquement (302) les informations d'utilisateur passives, après l'authentification de l'utilisateur, par le biais d'un premier ensemble d'une pluralité d'entrées (240) dans le dispositif (200) en se basant sur un intervalle de temps prédéfini, dans lequel les informations d'utilisateur passives surveillées comprennent au moins un balayage de la rétine d'un utilisateur ultérieur du dispositif (200), un balayage des empreintes digitales de l'utilisateur ultérieur, et des informations décrivant un style de frappe associé à l'utilisateur ultérieur ;
entraîner le traitement des informations d'utilisateur passives au niveau d'un moteur de sécurité passive (216), dans lequel le traitement amène le moteur de sécurité passive (216) à :
déterminer un score associé à l'utilisateur ultérieur du dispositif (200), le score comporte un ensemble de sous-scores qui comprennent un premier sous-score correspondant au balayage de la rétine de l'utilisateur ultérieur, un deuxième sous-score correspondant au balayage des empreintes digitales de l'utilisateur ultérieur, et un troisième sous-score correspondant au style de frappe associé à l'utilisateur ultérieur ;
déterminer que l'utilisateur ultérieur est différent de l'utilisateur authentifié en se basant sur une comparaison du score associé à l'utilisateur ultérieur et des informations stockées dans le profil associé à l'utilisateur authentifié ; et
en réponse à la détermination comme quoi l'utilisateur ultérieur est différent de l'utilisateur authentifié, déterminer au moins une fonction de sécurité respective devant être effectuée pour au moins la première application associée au moteur de sécurité passive (216) en se basant sur le score déterminé ; et
effectuer ladite au moins une fonction de sécurité respective pour au moins la première application associée au moteur de sécurité passive (216) en se basant sur le score déterminé,
dans lequel, après avoir déterminé que le score correspond à une première plage, la fonction de sécurité effectuée permet à l'utilisateur ultérieur de continuer à utiliser à la fois la première application et la deuxième application,
dans lequel, après avoir déterminé que le score correspond à une deuxième plage, la fonction de sécurité effectuée limite l'accès de l'utilisateur à la fois à la première application et à la deuxième application, et
dans lequel, après avoir déterminé que le score correspond à une troisième plage, la fonction de sécurité effectuée surveille les informations d'utilisateur passives par le biais d'un deuxième ensemble différent de la pluralité d'entrées (240) dans le dispositif pour réaliser d'autres contrôles de sécurité.

10. Procédé selon la revendication 9, dans lequel les applications de la pluralité d'applications (210) comprennent au moins l'une parmi : une application Web et une application autonome de document à diffusion restreinte, et dans lequel les informations d'utilisateur passives traitées sont basées sur une fonction des informations d'utilisateur passives et des règles associées aux applications respectives.

11. Dispositif informatique comportant :
au moins un processeur et un support de stockage non transitoire lisible par machine stockant des instructions qui, quand elles sont exécutées par ledit au moins un processeur, amènent le dispositif informatique à :
associer une pluralité d'applications (210) comprenant au moins une première application et une deuxième application à un moteur de sécurité passive (216) ;
authentifier un utilisateur d'un dispositif en se basant sur des identifiants de connexion, dans lequel, une fois l'authentification effectuée, l'utilisateur authentifié est autorisé à utiliser la première application et la deuxième application ;
accéder à un profil associé à l'utilisateur authentifié, dans lequel le profil fournit des informations associées à l'utilisateur authentifié ;
surveiller périodiquement les informations d'utilisateur passives après l'authentification de l'utilisateur, par le biais d'un premier ensemble d'une pluralité d'entrées (240) dans le dispositif en se basant sur un intervalle de temps prédéfini, dans lequel les informations d'utilisateur passives surveillées comprennent au moins un balayage de la rétine d'un utilisateur ultérieur du dispositif, un balayage des empreintes digitales de l'utilisateur ultérieur, et des informations décrivant un style de frappe associé à l'utilisateur ultérieur ;
entraîner le traitement des informations d'utilisateur passives au niveau du moteur de sécurité passive (216), dans lequel le traitement amène le moteur de sécurité passive (216) à :
déterminer un score associé à l'utilisateur ultérieur du dispositif, le score comporte un ensemble de sous-scores qui comprennent un premier sous-score correspondant au balayage de la rétine de l'utilisateur ultérieur, un deuxième sous-score correspondant au balayage des empreintes digitales de l'utilisateur ultérieur, et un troisième sous-score correspondant au style de frappe associé à l'utilisateur ultérieur ;
déterminer que l'utilisateur ultérieur est différent de l'utilisateur authentifié en se basant sur une comparaison du score associé à l'utilisateur ultérieur et des informations stockées dans le profil associé à l'utilisateur authentifié ; et
en réponse à la détermination comme quoi l'utilisateur ultérieur est différent de l'utilisateur authentifié, déterminer au moins une fonction de sécurité respective devant être effectuée pour au moins la première application associée au moteur de sécurité passive (216) en se basant sur le score déterminé ; et
effectuer ladite au moins une fonction de sécurité respective pour au moins la première application associée au moteur de sécurité passive (216) en se basant sur le score déterminé,
dans lequel, après avoir déterminé que le score correspond à une première plage, la fonction de sécurité effectuée permet à l'utilisateur ultérieur de continuer à utiliser à la fois la première application et la deuxième application,
dans lequel, après avoir déterminé que le score correspond à une deuxième plage, la fonction de sécurité effectuée limite l'accès de l'utilisateur à la fois à la première application et à la deuxième application, et
dans lequel, après avoir déterminé que le score correspond à une troisième plage, la fonction de sécurité effectuée surveille les informations d'utilisateur passives par le biais d'un deuxième ensemble différent de la pluralité d'entrées (240) dans le dispositif pour réaliser d'autres contrôles de sécurité.

12. Dispositif informatique selon la revendication 11, dans lequel les applications de la pluralité d'applications (210) comprennent au moins l'une parmi : une application Web et une application autonome de document à diffusion restreinte, et dans lequel les fonctions de sécurité respectives sont basées sur une fonction des informations d'utilisateur passives et des règles associées aux applications respectives.

13. Dispositif informatique selon la revendication 12, dans lequel la fonction est basée sur un niveau de sécurité des applications respectives.
